Europäisches Patentamt

European Patent Office

Office européen des brevets

(11) Publication number: **0 107 279**
**B1**

(12) EUROPEAN PATENT SPECIFICATION

(45) Date of publication of patent specification: **28.10.87**

(51) Int. Cl.⁴: **G 01 N 27/56**

(21) Application number: **83304508.1**

(22) Date of filing: **04.08.83**

(54) Carbon monoxide sensor element.

(30) Priority: **27.08.82 JP 147530/82**

(43) Date of publication of application:
**02.05.84 Bulletin 84/18**

(45) Publication of the grant of the patent:
**28.10.87 Bulletin 87/44**

(84) Designated Contracting States:
**DE FR GB**

(56) References cited:
**DE-A-2 322 986**
**FR-A-2 321 696**
**FR-A-2 348 487**
**GB-A-2 020 824**
**US-A-3 786 462**
**US-A-4 005 001**

(73) Proprietor: **HITACHI, LTD.**
**6, Kanda Surugadai 4-chome Chiyoda-ku Tokyo 100 (JP)**
(73) Proprietor: **Hitachi Chemical Co., Ltd.**
**1-1, Nishi-shinjuku 2-chome Shinjuku-ku Tokyo 160 (JP)**

(72) Inventor: **Katsumoto, Masayuki**
**1282-206 Josuihoncho**
**Kodaira-shi (JP)**
Inventor: **Okamoto, Hiroshi**
**17-10 Nogamicho-2-chome**
**Ome-shi (JP)**
Inventor: **Kobayashi, Masaru**
**21-2-206 Nishinarusawacho-3-chome**
**Hitachi-shi (JP)**

(74) Representative: **Paget, Hugh Charles Edward et al**
**MEWBURN ELLIS & CO. 2/3 Cursitor Street London EC4A 1BQ (GB)**

Courier Press, Leamington Spa, England.

## Description

This invention relates to a gas sensor element selectively sensitive to carbon monoxide.

It is well known, for example, from Japanese Patent Publication No. 52-14639, etc. that an element provided with at least one pair of electrodes on a substrate of oxygen ion-conductive solid electrolyte is sensitive to CO and $H_2$ at a temperature of less than about 400°C, but since the sensitivity to $H_2$ is higher than that to CO, such an element cannot be used as a selective CO gas sensor element. Since CO is a toxic gas with a high risk of causing poisoning, it is desirable to detect CO at a concentration of at least 200 ppm, whereas since $H_2$ carries only a risk of explosion, it is desirable to detect $H_2$ at least at one twentieth of the lower explosion limit, that is, at a concentration of at least about 2000 ppm. When this difference in the quality of risk is taken into account, it is rather desirable not to detect $H_2$ at a concentration below 2000 ppm.

GB—A—2020824 discloses a gas sensor using a solid electrolyte in which an oxidizing catalyst layer covers one of the electrodes so that all combustible gas is oxidized before reaching that electrode, enabling the total amount of combustible gas to be measured.

US—A—4005001 on the other hand proposes a solid electrolyte sensor in which the two electrodes themselves have different catalytic effects on the gaseous mixture.

FR—A—2321696 describes detectors having bodies formed of several different semiconductors based on metal oxides. Electrodes monitor the effect of adsorption and desorption of gas.

An object of the present invention is to provide a CO sensor element sensitive to CO at a low concentration and sensitive to other combustible gases only at high concentration or not sensitive thereto in practice.

The invention is set out in claim 1.

Embodiments of the invention are described below by way of example with reference to the accompanying drawings, in which:—

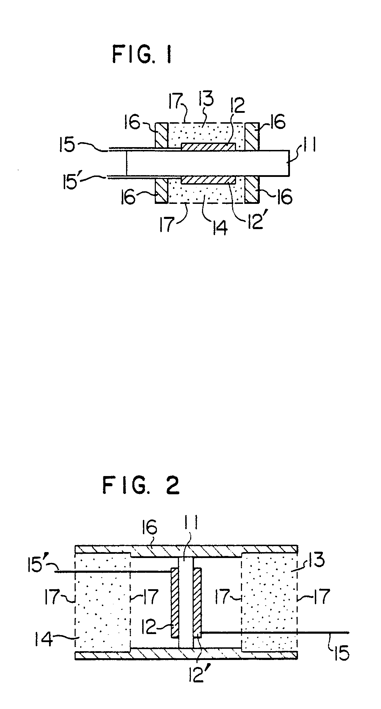

Figs. 1 and 2 are cross-sectional views of respective sensor elements embodying the present invention.

Some of the present inventors discovered a gas sensor element which comprises at least one pair of electrodes on an oxygen ion-conductive solid electrolyte, a first catalyst bed having a high catalytic oxidation activity provided on one of the electrodes as a pseudo air electrode, and a second catalyst bed having a low catalytic oxidation activity provided on the other of the electrodes (Japanese Patent Application No. 56-196809). When the catalyst of the second catalyst bed has a very low combustible gas oxidation activity, the rates at which the respective gases reach the electrode will differ from one another due to different conversions of species of combustible gases, and thus, for example, CO and $H_2$ can be detected from each other under certain special conditions. In fact, this requires some very special conditions, for example, substantially the same and relatively high initial concentrations of CO and $H_2$, etc., and thus such a device has many problems in its use as a practical CO sensor element. Particularly, it is difficult to detect CO at a concentration of about 200 ppm when the $H_2$ concentration is high.

It is desirable that a CO sensor element is sensitive to CO with its high risk of causing poisoning at a concentration of at least about 200 ppm and is not sensitive to other combustible gases with no risk of gas poisoning, for example, $H_2$, $CH_4$, etc. only at least below the concentration of 1/20, or preferably below the 1/4 of their lower explosiion limits.

According to the basic principle of the present invention, at least one pair of electrodes are provided on or over an oxygen ion-conductive solid electrolyte, and a first catalyst having a thorough activity to oxidize CO and other combustible gases such as $H_2$, etc. is provided on one of the electrodes, where these gases are contacted with the catalyst to completely oxidize the gases. This one of the electrodes is guaranteed thereby to act as a pseudo air electrode, whereas a second catalyst having a considerably higher oxidation activity to $H_2$ than that to CO (at least 3, preferably at least 10, most preferably at least 30 in oxidation activity ratio, which will be defined below) is provided on or over the other of the electrodes, whereby only $H_2$ is susbtantially completely oxidized and only CO is allowed to reach the gas electrode. Thus the device can act as a CO gas sensor.

The said oxidation activity ratio can be calculated as a ratio (activity ratio) according to the following formula:

$$\log(1-X_H)/\log(1-X_{co})$$

where $X_H$ is the conversion of $H_2$ and $X_{co}$ is the conversion of CO under the similar experimetnal conditions.

The higher the ratio, the better. However, measurement is possible only up to 300 at most.

The catalyst for use in the second catalyst bed or surface of the present sensor element is preferably at least one compound selected from $SnO_x$ (where x is in a range of 1 to 2), $Cr_2O_y$ (where y is in a range of 2.5 to 3), and $TiO_2$ (where z is in a range of 1 to 2), or a catalyst consisting of $SnO_x$ (where x has the same meaning as defined above) and an alkali metal salt.

It is preferable that x is in a range of 1.5 to 1.95, z is in a range of 1.5 to 2.0, and w is in a range of 4.5 to 5.

The amount of the alkali metal salt is preferably 5 to 100% by weight, more preferably 10 to 40% by weight, on the basis of $SnO_x$.

**0 107 279**

An example of procedures for preparing catalysts for use in the present invention will be described below:

40 g of $SnCl_2 \cdot 2H_2O$ is dissolved in 48 ml of concentrated hydrochloric acid over a water bath at 70° to 80°C, and then the solution is cooled. Then, an aqueous $Na_2CO_3$ solution having a concentration of 1 mole/l is added dropwise to the solution to make pH 9. The resulting precipitates are separated by centrifuge, and dried at 110° to 130°C for one hour and calcined in air at 500°C for 10 hours. 0.3 g of the thus obtained powder of $SnO_{1.7} \cdot 22$ wt.% NaCl (22 wt.% being based on $SnO_{1.7}$) is diluted with 0.7 g of pyrex powder. The resulting mixture is filled into a reactor tube having an inner diameter of 13 mm, and a gas containing 1500 ppm of $H_2$, 1500 ppm of CO and 21% of $O_2$, the balance being $N_2$, is passed through the reactor tube at a rate of 150 ml/min at various temperatures. $H_2$ and CO concentrations of effluent gas are analyzed. The results are shown in Table 1. X-ray analysis of the catalyst shows peaks of SnO, $SnO_2$ and NaCl.

TABLE 1

| Reaction temp. (°C) | CO conversion (%) | $H_2$ conversion (%) | Activity ratio |
|---|---|---|---|
| 300 | 4 | 38 | 11.7 |
| 330 | 5 | 68 | 22.2 |
| 350 | 5 | 78 | 29.5 |
| 370 | 6 | 88 | 34.3 |
| 400 | 9 | 95 | 31.7 |

Likewise, another catalyst is prepared in the same manner as above except that $K_2CO_3$ is used as a neutralizing agent and neutralization up to pH 5 is carried out at 70° to 80°C, and tested with respect to CO conversion and $H_2$ conversion in the same manner as above. The results are shown in Table 2.

TABLE 2

| Reaction temp. (°C) | CO conversion (%) | $H_2$ conversion (%) | Activity ratio |
|---|---|---|---|
| 300 | 1 | 52 | 73 |
| 330 | 9 | 74 | 14.3 |
| 350 | 5 | 91 | 46.9 |
| 370 | 10 | 93 | 25.2 |
| 400 | 10 | 98 | 37.1 |

The catalyst for use in the first catalyst bed or surface is preferably platinum, palladium and oxides of transition metals other than Sn, Cr, Ti and V, but is not limited to these substances.

Embodiments of the present invention will be described in detail below, referring to the accompanying drawings.

In Fig. 1, a sensor element according to one embodiment of the present invention is shown, where a stabilized zirconia substrate 11 has porous platinum electrodes 12 and 12', and lead wires 15 and 15'. On the electrode 12, there is a first catalyst bed 13 consisting of alumina-supported platinum having an activity such as to achieve complete combustion of combustible gases such as $H_2$, CO, etc. On the other electrode 12', there is a second catalyst bed 14 containing a catalyst having a higher oxidation activity to $H_2$ than to CO. Numeral 16 shows walls of alumina, etc. to support the catalyst beds, and numeral 17 shows stainless steel wire meshes to support the catalyst beds.

In Fig. 2, a sensor element according to another embodiment of the present invention is shown, where a stabilized zirconia substrate 11 has porous platinum electrodes 12 and 12' and lead wires 15 and 15' in the same manner as in Fig. 1. A first catalyst bed 13 consisting of alumina-supported platinum having an activity such as to achieve complete combustion of combustible gases such as $H_2$, CO, etc. is provided spaced from the porous platinum electrode 12. A second catalyst bed 14 containing a catalyst having a higher oxidation activity to $H_2$ than to CO is provided spaced from the porous platinum electrode. Numeral

3

16 is walls of alumina, etc. to support the catalyst beds, and numeral 17 is stainless steel wire meshes to support the catalyst beds.

Examples of the present invention will be described below.

Example 1

An alumina-supported platinum catalyst was used for the first catalyst bed in the sensor element shown in Fig. 1, and 0.2 $g/m^2$ of a catalyst of $SnO_{1.7} \cdot 22$ wt.% NaCl (22 wt.% being based on $SnO_{1.7}$) prepared according to the procedure above was used for the second catalyst bed, and air containing 200 ppm of CO was passed over the sensor element which was kept at 350°C. An electromotive force of 30 mV was generated between the two electrodes at that time. The electromotive force will be hereinafter referred to as $V_{E(X)}$. Without the second catalyst bed, the electromotive force generated between the two electrodes was likewise 30 mV, which will be hereinafter referred to as $V_{E(0)}$. This means that CO could reach the electrode surface without any substantial oxidation by the second catalyst bed. Thus, $V_{E(X)}/V_{E(0)}=1$.

On the other hand, when air containing 200 ppm of $H_2$ was passed over the sensor element, it was found that $V_{E(0)}=75$ mV, $V_{E(X)}=5$ mV and thus $V_{E(X)}/V_{E(0)}=0.07$.

When air containing 2000 ppm of $H_2$ was passed thereover, it was found that $V_{E(0)}=200$ mV, $V_{E(X)}=29$ mV, and thus $V_{E(X)}/V_{E(0)}=0.15$.

Another sensor element was prepared in the same manner as above, except that 0.2 $g/cm^2$ of a catalyst of $SnO_{1.6} \cdot 20$ wt.% KCl (20 wt.% being based on $SnO_{1.6}$) prepared in the same manner as above was used for the second catalyst bed, and tested in the same manner as above. The same results as above could be obtained within the errors of measurement.

Examples 2—6

Catalyst shown in Table 3 were used for the second catalyst bed of Example 1, and tested in the same manner as in Example 1, except that 0.6 $g/cm^2$ of the catalyst bed ($Cr_2O_y$) was used in Example 4, and 0.4 $g/cm^2$ of the catalyst bed ($TiO_2$) was used in Example 5, whereas 0.2 $g/cm^2$ of the catalyst bed was used in other Examples. Results are shown in Table 3, where Examples i, ii and iii are comparative examples. Activity ratio was obtained from the values measured at 350°C under the same conditions as in Table 1. The value of $V_{E(0)}$ was naturally the same as in Example 1.

In Table 4, ratios of $V_{E(X)}$ at 200 ppm of CO to $V_{E(X)}$ at $H_2$ (represented by $V_{E(CO)}/V_{E(H_2)}$ are shown. It is obvious from Table 4 that the electromotive force is larger with CO.

TABLE 3

| Ex. No. | Catalyst | Activity ratio | CO 200 ppm | | H$_2$ 200 ppm | | H$_2$ 2000 ppm | |
|---|---|---|---|---|---|---|---|---|
| | | | $V_{E(X)}$ (mV) | $V_{E(X)}/V_{E(O)}$ | $V_{E(X)}$ (mV) | $V_{E(X)}/V_{E(O)}$ | $V_{E(X)}$ (mV) | $V_{E(X)}/V_{E(O)}$ |
| 1 | SnO$_{1.7}$ · NaCl | 29.5 | 30 | 1 | 5 | 0.07 | 29 | 0.15 |
| 2 | snO$_x$ | 7.5 | 22 | 0.7 | 5 | 0.07 | 29 | 0.25 |
| 3 | SnO$_x$ | 3.7 | 14 | 0.5 | 5 | 0.07 | 25 | 0.13 |
| 4 | Cr$_2$O$_y$ | 3.9 | 18 | 0.6 | 7 | 0.1 | 32 | 0.16 |
| 5 | TiO$_2$ | 4.0 | 15 | 0.5 | 5 | 0.07 | 28 | 0.14 |
| i | Fe$_2$O$_3$ | 0.14 | 10 | 0.3 | 70 | 0.93 | 195 | 0.98 |
| ii | MnO$_2$ | 0.38 | 0 | 0 | 65 | 0.9 | 190 | 0.85 |
| iii | CuO | 0.43 | 10 | 0.3 | 50 | 0.8 | 160 | 0.80 |

| No. | $H_2$ 200 ppm $V_{E(CO)}/V_{E(H_2)}$ | $H_2$ 2000 ppm $V_{E(CO)}/V_{E(H_2)}$ |
|---|---|---|
| 1 | 6 | 1 |
| 2 | 4 | 0.8 |
| 3 | 3 | 0.6 |
| 4 | 2.6 | 0.6 |
| 5 | 3 | 0.5 |
| i | 0.14 | 0.05 |
| ii | 0 | 0 |
| iii | 0.2 | 0.06 |

**Claims**

1. A carbon monoxide sensor element which comprises an oxygen ion-conductive solid electrolyte (11), at least one pair of electrodes (12, 12') provided on the solid electrolyte, and a first catalyst bed or surface (13) arranged to allow a gas containing combustible gases to reach one of the electrodes (12) after thorough oxidation of the combustion gases, characterized in that a second catalyst bed or surface (14) containing a catalyst having an oxidation activity to $H_2$ at least three times that of CO is arranged to allow the gas to reach the other electrode (12') after faster oxidation of $H_2$ than CO.

2. A carbon monoxide sensor element according to claim 1, wherein the catalyst having an oxidation activity to $H_2$ at least three times that to CO is at least one compound selected from $SnO_x$, where x is in a range of 1 to 2, $Cr_2O_y$, where y is in a range of 2.5 to 3, and $TiO_z$, where z is in a range of 1 to 2.

3. A carbon monoxide sensor element according to claim 1 wherein the catalyst having an oxidation activity to $H_2$ at least three times that to CO is a catalyst consisting of an alkali metal salt and $SnO_x$, where x is in a range of 1 to 2.

4. A carbon monoxide sensor element according to any one of claims 1 to 3, wherein the first catalyst bed or surface containing at least one catalyst selected from platinum, palladium and oxides of transition metals other than Sn, Cr, Ti and V.

5. A carbon monoxide sensor element according to any one of claims 1 to 4 wherein the catalyst contained in the second catalyst bed or surface is a catalyst having an oxidation activity to $H_2$ at least ten times as high as that to CO.

**Patentansprüche**

1. Kohlenmonoxid-Sensorelement, das einen Sauerstoffionen leitenden Festelektrolyten (11), wenigstens ein Paar von auf dem Festelektrolyten vorgesehen Elektroden (12, 12') und eine erste Katalysatorschicht oder Fläche 13 aufweist, die so ausgebildet ist, daß ein brennbare Gase enthaltendes Gas nach gründlicher Oxidation der brennbaren Gase eine der Elektroden (12) erreichen kann, dadurch gekennzeichnet, daß eine zweite Katalysatorschicht oder Fläche (14), die einen Katalysator enthält, dessen Oxidationsaktivität für $H_2$ wenigstens dreimal so groß ist wie für CO, so ausgebildet ist, daß das Gas die andere Elektrode (12') nach schnellerer Oxidation von $H_2$ als CO erreicht.

2. Kohlenmonoxid-Sensorelement nach Anspruch 1, bei dem der Katalysator, dessen Oxidationsaktivität für $H_2$ wenigstens dreimal so groß ist wie für CO, wenigstens eine Verbindung ist, die aus der Gruppe ausgewählt ist, welche $SnO_x$, wobei x im Bereich von 1—2 liegt, $Cr_2O_y$, wobei y im Bereich zwischen 2,5 und 3 liegt, und $TiO_2$, wobei z im Bereich zwischen 1 und 2 liegt, umfaßt.

3. Kohlenmonoxid-Sensorelement nach Anspruch 1, bei dem der Katalysator, dessen Oxidationsaktivität für $H_2$ wenigstens dreimal so groß ist wie für CO, ein Katalysator ist, der aus einem Alkalimetallsalz und $SnO_x$ besteht, wobei x is Bereich zwischen 1 und 2 liegt.

4. Kohlenmonoxid-Sensorelement nach einem der Ansprüche 1—3, bei dem die erste Katalysatorschicht oder Fläche wenigstens einen Katalysator aufweist, der aus Platin, Palladium und Oxiden der von Sn, Cr, Ti und V verschiedenen Übergangsmetalle ausgewählt ist.

5. Kohlenmonoxid-Sensorelement nach einem der Ansprüche 1—4, bei dem der in der zweiten Katalysatorschicht oder Fläche enthaltene Katalysator ein Katalysator ist, dessen Oxidationsaktivität für $H_2$ wenigstens zehnmal so groß ist wie der für CO.

## 0 107 279

**Revendications**

1. Elément formant capteur de monoxyde de carbone, qui comprend un électrolyte solide (11) conducteur pour les ions oxygène, au moins un couple d'électrodes (12, 12') prévues sur l'électrolyte solide, et un premier lit our surface de catalyseur (13) agencé de manière à permettre à un gaz contenant des gaz combustibles d'atteindre l'une des électrodes (12) après oxydation complète des gaz combustibles, caractérisé en ce qu'un second lit ou surface (14) de catalyseur, contenant un catalyseur possédant une activité d'oxydation au moins trois fois plus élevée pour le $H_2$ que pour le CO est agencé de manière à permettre au gaz d'atteindre l'autre électrode (12') après une oxydation plus rapide de $H_2$ que de CO.

2. Elément formant capteur de monoxyde de carbone selon la revendication 1, dans lequel le catalyseur possédant une activité d'oxydation au moins trois fois plus élevée pour le $H_2$ que pour le CO est au moins un composé choisi parmi $SnO_x$, où x se situe dans la gamme de 1 à 2, $Cr_2O_y$, où y se situe dans la gamme de 2,5 à 3, et $TiO_z$, où z se situe dans la gamme de 1 à 2.

3. Elément formant capteur de monoxyde de carbone selon la revendication 1, dans lequel le catalyseur possédant une activité d'oxydation au moins trois fois plus élevée pour le $H_2$ que pour le CO est un catalyseur constitué par un sel d'un métal alcalin et par du $SnO_x$, x étant situé dans une gamme allant de 1 à 2.

4. Elément formant capteur de monoxyde de carbone selon l'une quelconque des revendications 1 à 3, dans lequel le premier lit ou surface de catalyseur contient au moins un catalyseur choisi parmi le platine, le palladium et des oxydes de métaux de transition autres que Sn, Cr, Ti et V.

5. Elément formant capteur de monoxyde de carbone selon l'une quelconque des revendications 1 à 4, dans lequel le catalyseur contenu dans le second lit ou surface de catalyseur est un catalyseur possédant un activité d'oxydation qui est au moins dix fois plus élevée pour le $H_2$ que pour le CO.

7

0 107 279

FIG. 1

FIG. 2

1